# EUROPEAN PATENT SPECIFICATION

(11) **EP 4 431 168 B1**
(45) Date of publication and mention of the grant of the patent: **29.10.2025**
(21) Application number: 23162303.4
(22) Date of filing: 16.03.2023
(51) Int. Cl.: B01D 1/26, B01D 3/06, B01D 3/14, C02F 1/06, C02F 103/08

(54) **DESALINATION APPARATUS AND METHODS**
ENTSALZUNGSVORRICHTUNG, UND -VERFAHREN
APPAREIL ET PROCÉDÉS DE DESSALEMENT

(43) Date of publication of application: 18.09.2024
(73) Proprietor: Rudig, Egon, 4700 Limassol (CY)
(72) Inventor: Rudig, Egon, 4700 Limassol (CY)
(74) Representative: Cameron Intellectual Property Ltd

(56) References cited:
- GB-A- 1 517 510
- US-A- 3 930 958
- US-A1- 2006 075 774
- US-B1- 9 968 865

## Description

### Technical Field

The present disclosure relates to desalination, particularly, but not exclusively, desalination of seawater.

### Background

Desalination can be a powerful tool to provide drinking water in communities around the world where access to drinking water is limited, but seawater is readily available. Several types of desalination are used such as multi-stage flash distillation, reverse osmosis and electrodialysis. Multi-stage flash distillation requires a high amount of power per m3 of water desalinated. Reverse osmosis requires a very high pump pressure of around 60 bar with associated construction and maintenance costs along with energy provision to maintain the high pressure. Electrodialysis uses electricity applied to electrodes to pull naturally occurring dissolved salts through an ion exchange membrane to separate the water from the salts.

Many of the known techniques are unsuitable for implementation in at least some environments where desalination of seawater is needed due to complexity of construction, power requirements and/or physical requirements such as space.

US patent number US9968865B1 discloses multiple effect with vapour compression distillation apparatuses.

### Summary

There is provided an apparatus for desalination of seawater, the apparatus comprising: a series of stacked cells, each cell comprising a bottom surface and a top surface, and a heat source for providing heat to the lowermost cell, wherein the top surface of each cell of the stacked cells except the uppermost cell, is in thermal communication with the bottom surface of the cell above, wherein each cell comprises a saltwater collection outlet in fluid connection with the bottom surface and a distilled water collection outlet in fluid communication with the top surface.

The top surface of each cell of the stacked cells (except the uppermost cell), and the bottom surface of the cell above may be opposing surfaces of a plate. The plate may be formed of a thermally conductive material.

The apparatus further comprises a pressure control system configured to control the pressure in each of the cells.

The stacked cells form a tower. In use, when the cells are heated, steam is produced in each of the cells and the steam rises upward. The steam is then condensed on the top surface of the cell which is the underside of the bottom surface of the cell above. The condensation produces/releases heat energy/enthalpy which heats the bottom of the cell above thereby conveying the heat energy of the steam, including the latent heat to the overlying cell. This process occurs in each cell in the tower/stack. By conveying the heat in this way from cell to cell, the system is ecological and energy-economical.

By controlling the pressure of each cell, the process can be made more efficient. By controlling the pressure of each cell, a different temperature may be required in each cell to achieve boiling/evaporation of the water. As such, less heat is required by the system in order to boil all of the stacked cells.

The saltwater collection outlet may be configured to allow saltwater out of the cell at a rate seven times less than the distilled water collection outlet. In this way, when seawater of 4% salt content is input to a cell, the collected saltwater has a 28% salt content. The system needs thereby only 14,3% more sea water than drinking water obtained.

Optionally, the pressure control system is configured to control the pressure of each cell dependent on the temperature of the respective cell, wherein the pressure of a cell is lower when the temperature of said cell is lower. The pressure control system is configured to adjust the pressure of each cell to maintain an evaporation point in each cell. For example, the temperature in each cell may be lower than the cell beneath it, due to the receipt of less heat than the cell beneath. The pressure in each cell may be adjusted to be lower than the cell beneath it to an extent that the boiling point is met in the cell. The boiling point of water is dependent on both pressure and temperature and so a different functional combination of temperature and pressure may be utilised for each cell. The pressure control system may comprise a temperature sensor for each cell and a pressure control device for each cell, the operation of the pressure control device being dependent on the measurements received from the temperature sensor.

The pressure control system comprises a vacuum control system. This enables the cells to have a pressure less than atmospheric pressure to reduce the required temperature to reach evaporation point. Optionally, the heat source is configured to heat the lowermost cell to 100°C. The lowermost cell may have a pressure equivalent to atmospheric pressure. Each of the other cells may have a temperature of 2°C less than the cell immediately below.

The pressure and temperature combinations may be calculated using the following equation: ln(P₁/P₂) = -ΔH/R × (1/T₁ - 1/T₂).

The heat source and/or pressure control system may be powered by solar power. For example, the heat source may comprise vacuum solar collectors. The low temperatures required allow the efficient use of solar power. For example, the drinking water and salt water of the cells may have a temperature from 100 - 60°C. The relatively low evaporation temperatures of 100 - 60°C allows also the use of vacuum solar panels which themselves may reach 120°C.

In one example apparatus comprising 21 cells, the lowermost cell may have a temperature of 100°C and a pressure of 1'014 mbar and the uppermost cell may have a temperature of 60°C and pressure of 199 mbar. These temperatures also have the benefit of killing any bacteria present through the average temperature of 100-60°C (80°C).

Optionally, the heat source comprises a heat bath in thermal communication with the bottom surface of the lowermost cell. The sea water from cell 1 is heated to boiling temperature (100°C) by the "heating water storage 110°C.

Optionally, the apparatus further comprises: a heat recovery system comprising a heat exchanger, the heat recovery system configured to: receive fluid from the heat bath, receive water from one or more distilled water collection outlets, pass the water from one or more distilled water collection outlets and the fluid from the heat bath through the heat exchanger, and return the fluid to the heat bath. This causes heat to pass from the distilled water to the fluid in the heat bath, thereby reducing the energy required to maintain the heat bath at the required temperature. Optionally, distilled water from lowest and/or hottest cells, for example the lowest/hottest half of the cells is received by the heat recovery system. This means that the heat energy used for heating the lowermost cell can be predominantly from heat recovery. In an example with 21 cells, distilled water from the lowest/hottest 11 cells may be used for heat recovery.

Optionally, each of the cells is ring shaped. Optionally, the distilled water outlets are each located at an inner side of their respective cells and/or the saltwater outlets are each located at an inner side of their respective cells, and/or the distilled water outlets are connected to one or more distilled water collection pipes passing down a middle of the stacked cells, and/or the saltwater outlets are connected to one or more saltwater collection pipes passing down a middle of the stacked cells. The ring shape may be circular another shape, such as a regular polygon or oval.

Optionally, each of the one or more distilled water collection pipes terminate at a respective dip tube in a distilled water collection container. This means that any overpressure, which may be caused by thermal expansion, escapes via the dip tube to the atmosphere. The reduction in pressure in the cells may cause a water column to form in the drinking water and/or saltwater collection pipes.

Optionally, the one or more saltwater collection pipes are connected to a saltwater collection container. This means that the saltwater is collected from each cell and the saltwater is not passed to the next cell for further desalination. Optionally, each cell receives seawater, thereby making desalination quicker and more efficient. Optionally, the apparatus further comprises a salt extractor and/or saltwater storage tank and/or a salt container. Thus, the saltwater is not released back into the sea where it can increase the local salt content. This reduces the effects on the environment of using the apparatus.

Each collection outlet may have its own collection pipe. Optionally, each pipe is positioned at a different point on the inner side of the cells. For example, each pipe may be positioned an amount of degrees from the adjacent pipe, the amount of degrees being 360/number of pipes.

Optionally, each cell is structurally the same as the other cells in the series except for a rotation in its orientation, for example a rotation of less than 360/number of cells from the orientation of the next cell. For example, with 21 cells, each cell may be oriented 12° apart.

Optionally, the collection pipes are formed of a material suitable for carrying seawater and fluids at temperatures of 60 to 100°C. For example, the pipes may be formed of PP Polypropylene.

Optionally, in each cell, the top surface of the cell is arranged to slope downwards towards the distilled water collection outlet of the cell. The slope may be 10 to 15 degrees, e.g. 12 degrees from horizontal. Optionally, in each cell, the bottom surface of the cell is arranged to slope downwards towards the respective saltwater collection outlet of the cell. The slope may be 10 to 15 degrees, e.g. 12 degrees from horizontal.

Optionally, in each cell, the distilled water collection outlet of the cell comprises a distilled water trough positioned beneath a lowermost part of the top surface of the cell. Optionally, in each cell, the saltwater water collection outlet of the cell comprises a saltwater trough positioned beneath a lowermost part of the bottom surface of the cell. Optionally, the troughs have a slope of 2.5% and a drain at the lowest point to the respective collection pipe. Optionally, the collection outlets are valved to enable pressure in the cells to be maintained by the pressure control system. For example, each collection outlet may comprise a first valve which controls flow into a chamber and a second valve which controls flow out of said chamber. A maximum of one of the valves is opened at any time. For example, when the collection outlet is to be opened, the first valve is closed and the second valve is opened. Only when the second valve is closed does the first valve open again.

Optionally, the cells are formed of a material suitable for carrying seawater such as stainless steel.

Optionally, the cells may have a width of over 1m, for example, 2m, 7m or 8m. Optionally, the tower of cells may have a height of over 5m, for example, 11.5m. The width of the cells may be measured as a diameter of the cells, where the cells are ring-shaped.

Optionally, each cell further comprises a seawater inlet at an outer edge of the cell. Optionally, the seawater inlet is controlled by a float valve which opens the inlet when the level of seawater in the cell falls below a threshold level. Optionally, the seawater is stored in a seawater tank at the top of the tower.

The pressure control system comprises a series of pressure control modules, each pressure control module being configured to control a pressure of a respective cell. Optionally, the pressure control modules are each connected to their respective cells at an outer edge of their respective cells. Each pressure control module may comprise a temperature sensor for measuring the temperature of the respective cell and a pressure control device for controlling the pressure of the respective cell. The operation of the pressure control device may be dependent on the measurements received from the temperature sensor.

Optionally, the apparatus comprises an elevator, stairs or ladder to enable travel up the apparatus, for example for maintenance. The elevator, stairs or ladder may be located in the middle of the cells or at a side of the tower. The apparatus may be installed on land or on a ship such as a cargo ship, or ocean liner. Depending on the size of apparatus installed, the apparatus may supply 23 m3/day of distilled water which is enough to sustain 76 people, or even 1'003 m3/day of distilled water which is enough to sustain 3'343 people.

There is further provided a system for desalination of seawater, the system comprising a plurality of apparatuses according to any preceding claim, and wherein the distilled water collection outlets of each cell in each apparatus are connected to a common system distilled water collection tank. Optionally, the saltwater collection outlets of each cell in each apparatus are connected to a common system saltwater collection tank.

There is further provided a method of desalinating seawater, using an apparatus as described above, the method comprising: providing seawater to each cell, heating the lowermost cell with the heat source, collecting saltwater from the saltwater collection outlets and collecting distilled water from the distilled water collection outlets.

Optionally, the method further comprises controlling the pressure in each cell with the pressure control system. Optionally, controlling the pressure in each cell comprises adjusting the pressure of each cell to maintain an evaporation point in each cell. Optionally, heating the lowermost cell with the heat source comprises heating the lowermost cell to 100°C. Optionally, the method further comprises producing sea salt from the collected saltwater.

Optionally, controlling the pressure in each cell with the pressure control system comprises: for each cell, when the cell reaches a temperature within a threshold of a vaporisation temperature of the cell, reducing the pressure of the cell. This means that the pressure control begins at the most efficient time, but waiting for the temperature to reach close to the desired temperature. The pressure reduction then activates the cell by lowering the evaporation/boiling temperature. The threshold may be within 1°C or within 0.5 °C. The threshold for each cell may be four times less than the desired temperature difference between the cell and the cell below.

The methods, apparatuses and systems described above may be combined in any possible combination. The optional features described above are equally applicable to all of the described methods, apparatuses and systems and are not limited to the particular methods, apparatuses or systems with which they are described here. The essential features of any of the method, apparatus or system described may be optional features of any other method, apparatus and system described.

Further features and advantages of the aspects of the present disclosure will become apparent from the claims and the following description.

### Brief Description of Drawings

Embodiments of the present disclosure will now be described by way of example only, with reference to the following diagrams, in which:-
Fig. 1 is a cross-sectional side view of an apparatus for desalination of seawater;
Fig. 2 is a cross-sectional side view of a portion of the apparatus of Fig. 1;
Fig. 3 is a plan view of a portion of the apparatus of Fig. 1;
Fig. 4 is a is a cross-sectional side view of a portion of the apparatus of Fig. 1;
Fig. 5 is a plan view of a portion of the apparatus of Fig. 1;
Fig. 6 is a cross-sectional side view of a system including two of the apparatuses as shown in Fig. 1.

### Detailed Description

A number of different embodiments of the disclosure are described subsequently.

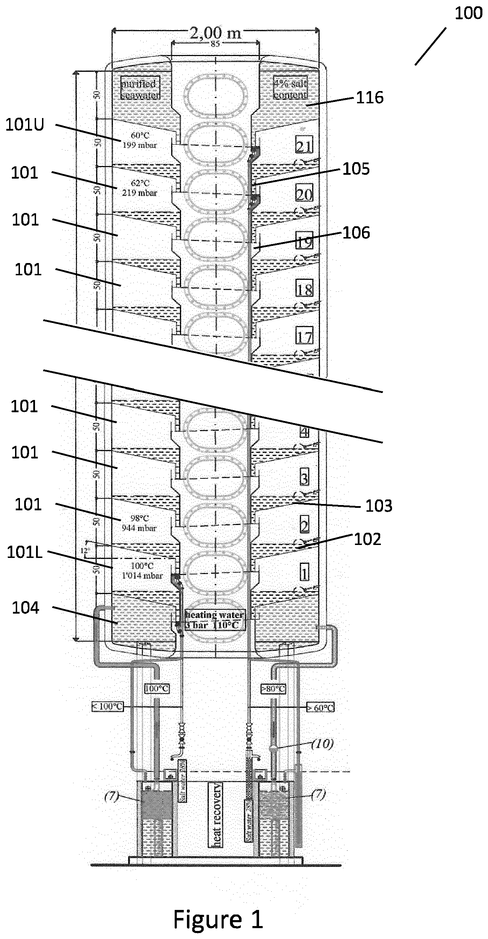

Fig. 1 shows an apparatus 100 for desalination of seawater. The apparatus includes a series of stacked cells 101, 101L, 101U, each cell comprising a bottom surface 102 and a top surface 103. The apparatus 100 also includes a heat source 104 for providing heat to the lowermost cell 101L. The top surface 103 of each cell of the stacked cells 101, 101L except the uppermost cell, is in thermal communication with the bottom surface 102 of the cell above. Each cell comprises a saltwater collection outlet 105 in fluid connection with the bottom surface 102 and a distilled water collection outlet 106 in fluid communication with the top surface 103. The stacked cells 101, 101L, 101U form a tower. The top surface 103 of each cell of the stacked cells 101, 101L except the uppermost cell, and the bottom surface 102 of the cell above are opposing surfaces of a thermally conductive plate. The plates are formed of stainless steel which is a material suitable for carrying seawater and is thermally conductive.

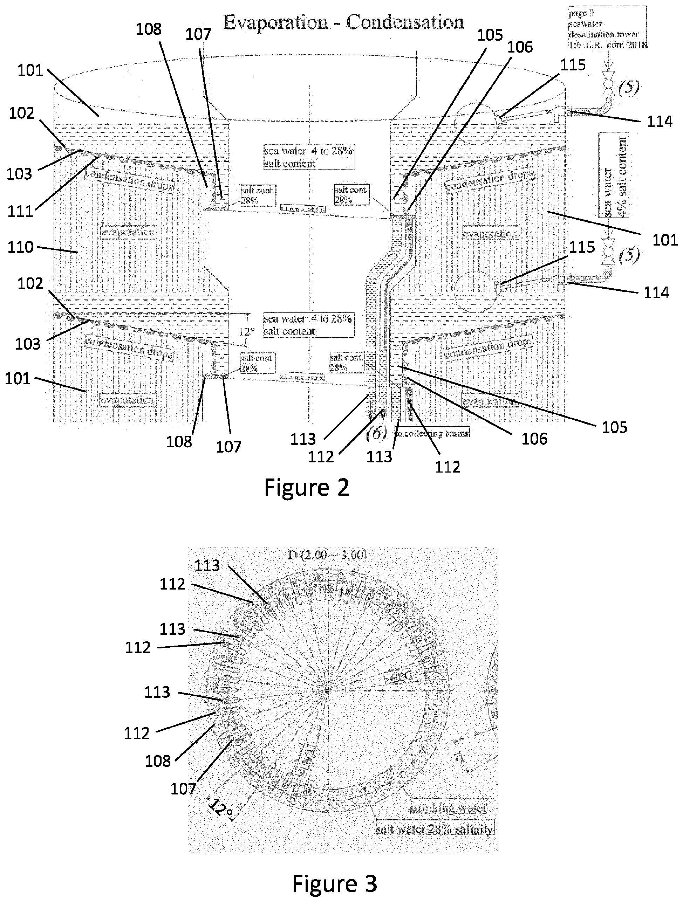

A portion of the cells 101 of apparatus 100 are shown in Fig. 2. As shown in Fig. 2, when the cells are heated, steam 110 is produced in each of the cells and the steam rises upward. The steam is then condensed 111 on the top surface 103 which is also the underside of the bottom surface 102 of the cell above. The condensation produces/releases heat energy/enthalpy which heats the bottom 102 of the cell above thereby conveying the heat energy of the steam 110, including the latent heat to the overlying cell. This process occurs in each cell 101 in the tower/stack. By conveying the heat in this way from cell to cell, the system is ecological and energy-economical.

Each of the cells 101, 101L, 101U is ring shaped. The distilled water outlets 106 are each located at an inner side of their respective cells and the saltwater outlets 105 are each located at an inner side of their respective cells. The distilled water outlets 106 are connected to respective distilled water collection pipes 112 passing down a middle of the stacked cells, and the saltwater outlets 105 are connected to respective saltwater collection pipes 113 passing down a middle of the stacked cells 101. The ring shape is circular.

Each pipe 112, 113 is positioned at a different point on the inner side of the cells as shown in Fig. 3 which shows the plan arrangement of the pipes 112, 113. Each pipe is positioned 12 degrees offset from the corresponding pipe of the adjacent cells, thereby allowing all of the pipes to pass straight down the inner side of the cells.

Each of the distilled water collection pipes 112 terminate at a respective dip tube in a distilled water collection container. This means that any overpressure, which may be caused by thermal expansion, escapes via the dip tube to the atmosphere.

The saltwater collection pipes 113 are connected to a saltwater collection container. Each cell receives seawater, via a seawater inlet 114. The saltwater is collected from each cell and the saltwater is not passed to the next cell for further desalination. Further, the saltwater is not released back into the sea where it can increase the local salt content and salt extraction can be used on the salt water to produce sea salt.

Each cell 101 is the same as each of the other cells 101, except for a rotation of less than 360/number of cells from the orientation of the next cell. In the apparatus of Fig. 3 and Fig. 1 which has twenty-one cells, each cell is oriented 12° apart. Note that in Fig. 1, not all cells are shown for simplicity.

The collection pipes 112, 113 are formed of PP Polypropylene which is suitable for carrying seawater and fluids at temperatures of 60 to 100°C.

In each cell 101, the top surface 103 of the cell is arranged to slope downwards towards the distilled water collection outlet 112 of the cell. The slope may be 10 to 15 degrees, e.g. 12 degrees from horizontal. In each cell, the bottom surface 102 of the cell is arranged to slope downwards towards the respective saltwater collection outlet 113 of the cell. The slope may be 10 to 15 degrees, e.g. 12 degrees from horizontal.

In each cell, the distilled water collection outlet 106 of the cell comprises a distilled water trough 108 positioned beneath a lowermost part of the top surface 103 of the cell. Further, in each cell 101, the saltwater water collection outlet 105 of the cell comprises a saltwater trough 107 positioned beneath a lowermost part of the bottom surface 102 of the cell. The troughs 107, 108 have a slope of 2.5% and a drain at the lowest point to the respective collection pipe 112, 113.

The cells 101 have a width of approx. 2m. The tower has a height of over 5m.

The seawater inlet 114 of each cell 101 is controlled by a respective float valve 115 which opens the inlet 114 when the level of seawater in the cell 101 falls below a threshold level. The seawater is stored in a seawater tank 116 at the top of the tower.

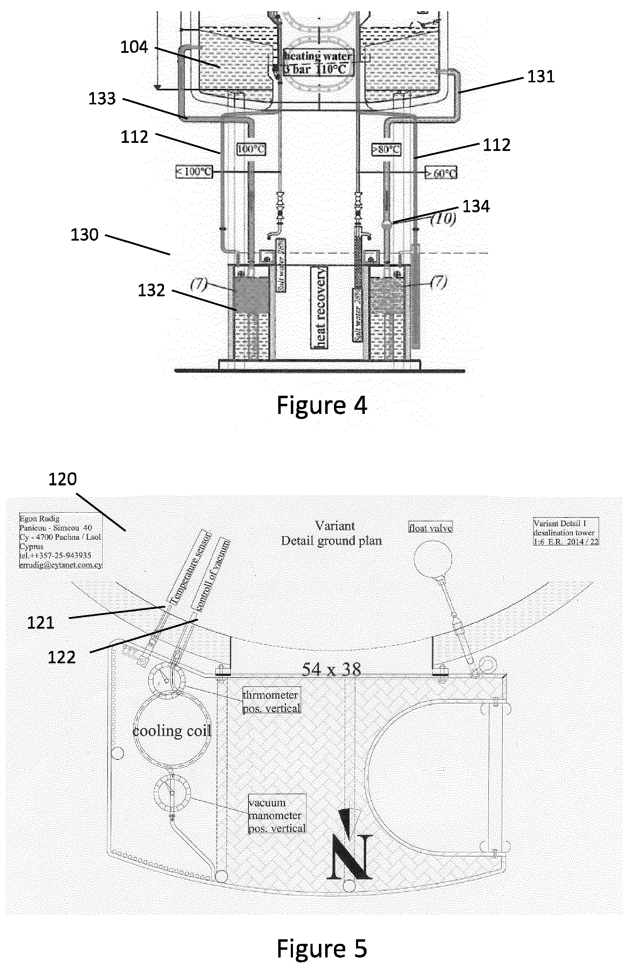

The apparatus 100 also includes a pressure control system, show in Fig. 5 configured to control the pressure in each of the cells 101, 101L, 101U. By controlling the pressure of each cell 101, 101L, 101U, the process can be made more efficient. By controlling the pressure of each cell, a different temperature may be required in each cell to achieve boiling/evaporation of the water. As such, less heat is required by the system in order to boil all of the stacked cells. The system needs only 14,3% more sea water than drinking water obtained.

The pressure control system is configured to control the pressure of each cell 101, 101L, 101U dependent on the temperature of the respective cell, wherein the pressure of a cell is lower when the temperature of said cell is lower. The pressure control system is configured to adjust the pressure of each cell to maintain an evaporation point in each cell. The temperature in each cell is lower than the cell beneath it, due to the receipt of less heat than the cell beneath. In use, the pressure in each cell is adjusted to be lower than the cell beneath it to an extent that the boiling point is met in the cell. The boiling point of water is dependent on both pressure and temperature and so a different functional combination of temperature and pressure is utilised for each cell.

The pressure control system comprises a series of pressure control modules 120, each pressure control module 120 being configured to control a pressure of a respective cell 101. The pressure control modules 120 are each connected to their respective cells at an outer edge of their respective cells. Each pressure control module comprises a temperature sensor 121 for measuring the temperature of the respective cell and a pressure control device 122 for controlling the pressure of the respective cell. The operation of the pressure control device 122 is dependent on the measurements received from the temperature sensor 121.

The pressure control system comprises a vacuum control system, enabling the cells to have a pressure less than atmospheric pressure to thereby reduce the required temperature to reach evaporation point.

In the system of Fig. 1, the heat source 104 is configured to heat the lowermost cell to 100°C. The lowermost cell 101L has a pressure equivalent to atmospheric pressure. Each of the other cells have a temperature of 2°C less than the cell immediately below. This may vary depending on the weather conditions and heat loss from the apparatus. The table below shows an example of temperatures and pressures that may be utilised in the apparatus of Fig. 1.

| cell | steam | p. absolute | 1 | 2 | 0,5 °C | Enthalpy | Enthallpy |
|---|---|---|---|---|---|---|---|
| | temp. °C | mbar | minus mbar | Δ mbar | Δ mbar | water kJ / kg | steam kJ / kg |
| 21 | **60** | 199 | 815 | 20 | 5 | 250.91 | 2'608,8 |
| 20 | 62 | 219 | 795 | 20 | 5 | 259.5 | 2'612,3 |
| 19 | 64 | 239 | 775 | 23 | 6 | 267,9 | 2'615,8 |
| 18 | 66 | 262 | 752 | 24 | 6 | 276,3 | 2'619,2 |
| 17 | 68 | 286 | 728 | 26 | 6,5 | 284,6 | 2'622,7 |
| 16 | 70 | 312 | 702 | 28 | 7 | 293,0 | 2'626,1 |
| 15 | 72 | 340 | 674 | 30 | 7,5 | 301,4 | 2'629,5 |
| 14 | 74 | 370 | 644 | 32 | 8 | 309.8 | 2'632,9 |
| 13 | 76 | 402 | 612 | 35 | 9 | 318,2 | 2'636,3 |
| 12 | 78 | 437 | 577 | 37 | 9 | 326,6 | 2'639,7 |
| 11 | **80** | 474 | 540 | 40 | 10 | 334,9 | 2'643,0 |
| 10 | 82 | 514 | 500 | 42 | 10,5 | 343,3 | 2'646,4 |
| 9 | 84 | 556 | 458 | 46 | 11,5 | 351,7 | 2'649,7 |
| 8 | 86 | 602 | 412 | 48 | 12 | 360,1 | 2'653,0 |
| 7 | 88 | 650 | 364 | 52 | 13 | 368,60 | 2'656,3 |
| 6 | **90** | 702 | 312 | 55 | 14 | 377,0 | 2'659,5 |
| 5 | 92 | 757 | 257 | 58 | 14,5 | 385.40 | 2'662,8 |
| 4 | 94 | 815 | 199 | 62 | 15,5 | 393,8 | 2'666,0 |
| 3 | 96 | 877 | 137 | 67 | 17 | 402,2 | 2'669,2 |
| 2 | 98 | 944 | 70 | 70 | 17,5 | 410,7 | 2'672,4 |
| 1 | **100** | **1'014** | **0** | | | 418,9 | 2'674,4 |

Column 1 shows the cell number, with cell 1 being at the bottom of the tower and cell 21 being the uppermost cell. Column 2 shows the desired temperature of each cell. Column 3 shows the pressure of each cell. Column 4 shows the difference in pressure between each cell and atmospheric pressure. Column 5 shows the difference in pressure between each cell and the cell below. Column 6 shows the difference in pressure from the cell below per 0.5°C, rounded to the nearest 0.5 (column 5 divided by 4). Column 7 shows the enthalpy of water in the cell and column 8 shows the enthalpy of steam in the cell.

The pressure and temperature combinations are calculated by the using the following equation: ln(P_{1/}P₂) = -ΔH/R × (1/T₁ - 1/T₂).

The heat source 104 and/or pressure control system are powered by solar power. The heat source 104 comprises vacuum solar collectors. The relatively low evaporation temperatures of 100 - 60°C allows also the use of vacuum solar panels which themselves may reach 120°C.

In the apparatus of Fig. 1 comprising twenty-one cells, the lowermost cell has a temperature of 100°C and a pressure of 1'014 mbar and the uppermost cell is controlled to have a temperature of 60°C and pressure of 199 mbar.

The heat source 104 comprises a heat bath in thermal communication with the bottom surface of the lowermost cell 101L. The sea water from cell 101L is heated to boiling temperature (100°C) by the heating water which may have a temperature of 110°C -120°C.

The apparatus 100 also includes a heat recovery system 130 which is shown in more detail in Fig. 4. The heat recovery system 130 comprises a heat exchanger, the heat recovery system configured to: receive fluid from the heat bath 104 via pipe 131, receive water from one or more distilled water collection outlets 112, pass the water from the one or more distilled water collection outlets and the fluid from the heat bath 104 through the heat exchanger, and return the fluid to the heat bath 104 via pipe 133.

This causes heat to pass from the distilled water to the fluid in the heat bath, thereby reducing the energy required to maintain the heat bath at the required temperature. Distilled water from the lowest and hottest cells, for example the lowest/hottest half of the cells is received by the heat recovery system 130. This means that the heat energy used for heating the lowermost cell 101L can be predominantly from heat recovery. In the apparatus shown in Fig. 1, with twenty-one cells, distilled water from the lowest and hottest eleven cells is used for heat recovery. The drinking water collecting basin therefore contains water between 100°C and 80°C.

The heating water is circulated from the heat bath to the heat exchanger and back to the heat bath by the pump 134. The pump moves the same the heating water at the same speed as the drinking water flows from the cells. This allows a flow temperature of 100°C and a return flow of >80°C.

The described apparatus can supply 23 m3/day of distilled water which is enough to sustain 76 people. It will be appreciated that by increasing the size of the apparatus, a higher volume of distilled water may be produced.

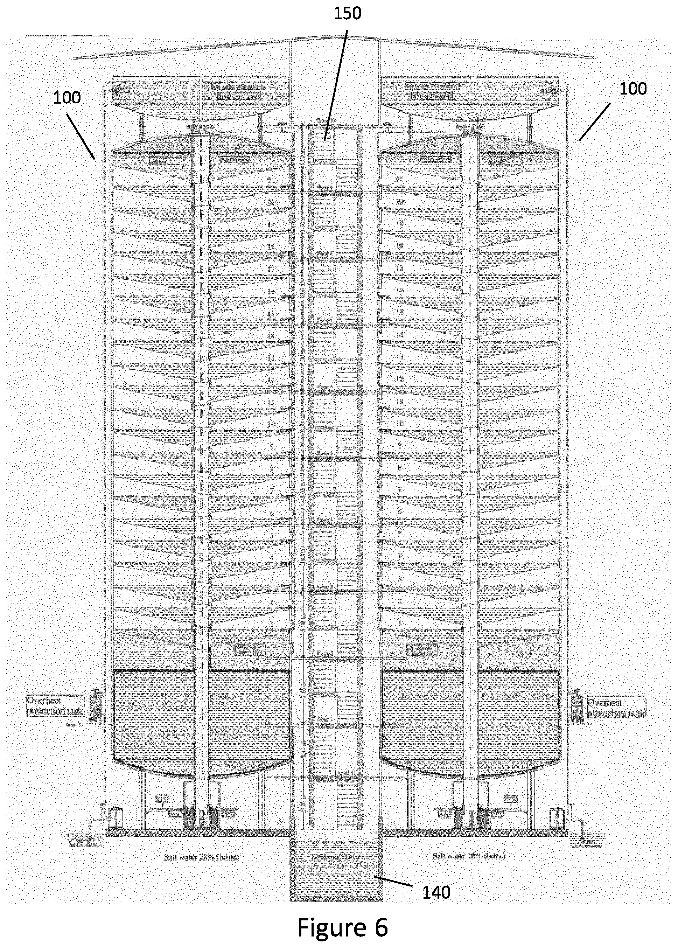

Fig. 6 shows a system for desalination of seawater, the system comprising two apparatuses 100 as described above. The distilled water collection outlets 112 of each cell 101, 101L, 101U in each apparatus 100 are connected to a common system distilled water tank 140. The saltwater collection outlets 113 of each cell 101, 101L, 101U in each apparatus 100 may be connected to a common system saltwater collection tank.

The system further comprises stairs 150 to enable travel up the apparatuses, for example for maintenance. The stairs are located between the apparatuses 100 at an outer side of each of the towers of cells.

The apparatus/system may be installed on land or on a ship such as a cargo ship, or ocean liner.

A method of desalinating seawater will now be described using the apparatus described above. The method comprises: providing seawater to each cell from the seawater tank 116 via the seawater inlets 114, heating the lowermost cell 101L with the heat source 104, controlling the pressure in each cell 101, 101L, 101U with the pressure control system, collecting saltwater from the saltwater collection outlets 105 and collecting distilled water from the distilled water collection outlets 112.

Controlling the pressure in each cell comprises adjusting the pressure of each cell 101, 101L, 101U to maintain an evaporation point in each cell. Heating the lowermost cell 101L with the heat source 104 comprises heating the lowermost cell to 100°C.

Controlling the pressure in each cell with the pressure control system comprises: for each cell, when the cell reaches a temperature within a threshold of a vaporisation temperature of the cell, reducing the pressure of the cell. This means that the pressure control begins at the most efficient time. The pressure reduction activates the cell by lowering the evaporation/boiling temperature to the temperature of the cell. The threshold may be within 5 degrees, or within 3 degrees or within 1 degree.

## Claims

1. An apparatus (100) for desalination of seawater, the apparatus comprising:
a series of stacked cells (101, 101L, 101U), each cell comprising a bottom surface (102) and a top surface (103), and
a heat source (104) for providing heat to the lowermost cell (101L),
wherein the top surface (103) of each cell of the stacked cells except the uppermost cell (101U), is in thermal communication with the bottom surface (102) of the cell above,
wherein each cell (101, 101L, 101U) comprises a saltwater collection outlet (105) in fluid connection with the bottom surface (102) and a distilled water collection outlet (106) in fluid communication with the top surface (103),
wherein the apparatus (100) further comprises a pressure control system configured to control the pressure in each of the cells (101, 101L, 101U), the pressure control system comprising a series of pressure control modules, each pressure control module being configured to control a pressure of a respective cell,
wherein the pressure control system comprises a vacuum control system, and
wherein the pressure control system is configured to adjust the pressure of each cell (101, 101L, 101U) to maintain an evaporation point in each cell.

2. The apparatus of claim 1, wherein the pressure control system is configured to control the pressure of each cell (101, 101L, 101U) dependent on the temperature of the respective cell, wherein the pressure control system is configured to cause the pressure of a cell to be lower when the temperature of said cell is lower.

3. The apparatus of any preceding claim, wherein the heat source (104) is configured to heat the lowermost cell (101L) to 100°C.

4. The apparatus of any preceding claim, wherein the heat source (104) comprises a heat bath in thermal communication with the bottom surface (102) of the lowermost cell (101L).

5. The apparatus of claim 4 further comprising a heat recovery system (130) comprising a heat exchanger (132), the heat recovery system configured to:
receive fluid from the heat bath,
receive water from one or more distilled water collection outlets (106),
pass the water from one or more distilled water collection outlets (106) and the fluid from the heat bath through the heat exchanger (132), and
return the fluid to the heat bath.

6. The apparatus of any preceding claim,
wherein each of the cells (101, 101L, 101U) is ring shaped,
the distilled water outlets (106) are each located at an inner side of the rings of their respective cells,
the saltwater outlets (105) are each located at an inner side of the rings of their respective cells,
the distilled water outlets (106) are connected to one or more distilled water collection pipes (112) passing down a middle of the stacked cells, and
the saltwater outlets (105) are connected to one or more saltwater collection pipes (113) passing down a middle of the stacked cells.

7. The apparatus of claim 6, wherein each of the one or more distilled water collection pipes (112) terminate at a respective dip tube in a distilled water collection container.

8. The apparatus of claim 6 or 7, wherein the one or more saltwater collection pipes (113) are connected to a saltwater collection container.

9. A method of desalinating seawater, using an apparatus (100) according to any of claims 1 to 8, the method comprising:
providing seawater to each cell (101, 101L, 101U),
heating the lowermost cell (101L) with the heat source (104),
controlling the pressure in each cell (101, 101L, 101U) with the pressure control system,
collecting saltwater from the saltwater collection outlets (105) and collecting distilled water from the distilled water collection outlets (106), wherein controlling the pressure in each cell (101, 101L, 101U) comprises adjusting the pressure of each cell to maintain an evaporation point in each cell (101, 101L, 101U).

10. A method of desalinating seawater according to claim 9, wherein heating the lowermost cell (101L) with the heat source (104) comprises heating the lowermost cell (101L) to 100°C.

11. A method of desalinating seawater according to any of claims 9 or 10, the method further comprising producing sea salt from the collected saltwater.

12. A method of desalinating seawater according to any of claims 9 to 11, wherein controlling the pressure in each cell (101, 101L, 101U) with the pressure control system comprises:
for each cell (101, 101L, 101U), when the cell reaches a temperature within a threshold of a vaporisation temperature of the cell, reducing the pressure of the cell.

## Patentansprüche

1. Vorrichtung (100) zur Entsalzung von Meerwasser, wobei die Vorrichtung Folgendes umfasst:
eine Reihe gestapelter Zellen (101, 101L, 101U), wobei jede Zelle eine untere Fläche (102) und eine obere Fläche (103) umfasst, und
eine Wärmequelle (104) zum Bereitstellen von Wärme für die unterste Zelle (101L),
wobei die obere Fläche (103) jeder Zelle der gestapelten Zellen, mit Ausnahme der obersten Zelle (101U), in thermischer Verbindung mit der unteren Fläche (102) der darüber liegenden Zelle steht, wobei jede Zelle (101, 101L, 101U) einen Sammelauslass für Salzwasser (105) in Fluidverbindung mit der unteren Fläche (102) und einen Sammelauslass für destilliertes Wasser (106)in Fluidverbindung mit der oberen Fläche (103) umfasst,
wobei die Vorrichtung (100) ferner ein Drucksteuersystem umfasst, das dazu konfiguriert ist, den Druck in jeder der Zellen (101, 101L, 101U) zu kontrollieren, wobei das Drucksteuersystem eine Reihe von Drucksteuermodulen umfasst, wobei jedes Drucksteuermodul dazu konfiguriert ist, einen Druck einer jeweiligen Zelle zu steuern,
wobei das Drucksteuersystem ein Vakuumsteuersystem umfasst, und wobei das Drucksteuersystem dazu konfiguriert ist, den Druck jeder Zelle (101, 101L, 101U) einzustellen, um einen Verdampfungspunkt in jeder Zelle aufrechtzuerhalten.

2. Vorrichtung nach Anspruch 1, wobei das Drucksteuersystem dazu konfiguriert ist, den Druck jeder Zelle (101, 101L, 101U) in Abhängigkeit von der Temperatur der jeweiligen Zelle zu steuern, wobei das Drucksteuersystem dazu konfiguriert ist, zu bewirken, dass der Druck einer Zelle niedriger ist, wenn die Temperatur der Zelle niedriger ist.

3. Vorrichtung nach einem der vorstehenden Ansprüche, wobei die Wärmequelle (104) dazu konfiguriert ist, die unterste Zelle (101L) auf 100°C zu erhitzen.

4. Vorrichtung nach einem der vorstehenden Ansprüche, wobei die Wärmequelle (104) ein Wärmebad umfasst, das in thermischer Verbindung mit der unteren Fläche (102) der untersten Zelle (101L) steht.

5. Vorrichtung nach Anspruch 4 ferner umfassend ein Wärmerückgewinnungssystem (130), das einen Wärmetauscher (132) umfasst, wobei das Wärmerückgewinnungssystem konfiguriert ist zum:
Aufnehmen von Flüssigkeit aus dem Wärmebad,
Aufnehmen von Wasser aus einem oder mehreren Sammelauslässen für destilliertes Wasser (106),
Weiterleiten des Wassers aus einem oder mehreren Sammelauslässen für destilliertes Wasser (106) und der Flüssigkeit aus dem Wärmebad durch den Wärmetauscher (132), und
Zurückführen der Flüssigkeit in das Wärmebad.

6. Vorrichtung nach einem der vorstehenden Ansprüche,
wobei jede der Zellen (101, 101L, 101U) ringförmig ist,
die Auslässe für destilliertes Wasser (106) sich jeweils an einer Innenseite der Ringe ihrer jeweiligen Zellen befinden,
die Auslässe für Salzwasser (105) sich jeweils an einer Innenseite der Ringe ihrer jeweiligen Zellen befinden,
die Auslässe für destilliertes Wasser (106) mit einem oder mehreren Sammelrohren für destilliertes Wasser (112) verbunden sind, die eine Mitte der gestapelten Zellen nach unten passieren, und
die Auslässe für Salzwasser (105) mit einem oder mehreren Sammelrohren für Salzwasser (113) verbunden sind, die eine Mitte der gestapelten Zellen nach unten passieren.

7. Vorrichtung nach Anspruch 6, wobei jede der einen oder der mehreren Sammelleitungen für destilliertes Wasser (112) an einem entsprechenden Tauchrohr in einem Sammelbehälter für destilliertes Wasser endet.

8. Vorrichtung nach Anspruch 6 oder 7, wobei die eine oder die mehreren Sammelleitungen für Salzwasser (113) mit einem Sammelbehälter für Salzwasser verbunden sind.

9. Verfahren zum Entsalzen von Meerwasser unter Verwendung einer Vorrichtung (100) nach einem der Ansprüche 1 bis 8, wobei das Verfahren Folgendes umfasst:
Bereitstellen von Meerwasser für jede Zelle (101, 101L, 101U),
Erhitzen der untersten Zelle (101L) mit der Wärmequelle (104),
Steuern des Drucks in jeder Zelle (101, 101L, 101U) mit dem Drucksteuersystem, Sammeln von Salzwasser aus den Sammelauslässen für Salzwasser (105) und
Sammeln von destilliertem Wasser aus den Sammelauslässen für destilliertes Wasser (106), wobei das Steuern des Drucks in jeder Zelle (101, 101L, 101U) das Einstellen des Drucks jeder Zelle umfasst, um einen Verdampfungspunkt in jeder Zelle (101, 101L, 101U) aufrechtzuerhalten.

10. Verfahren zum Entsalzen von Meerwasser nach Anspruch 9, wobei das Erhitzen der untersten Zelle (101L) mit der Wärmequelle (104) das Erhitzen der untersten Zelle (101L) auf 100°C umfasst.

11. Verfahren zum Entsalzen von Meerwasser nach einem der Ansprüche 9 oder 10, wobei das Verfahren ferner das Herstellen von Meersalz aus dem gesammelten Salzwasser umfasst.

12. Verfahren zum Entsalzen von Meerwasser nach einem der Ansprüche 9 bis 11, wobei das Steuern des Drucks in jeder Zelle (101, 101L, 101U) mit dem Drucksteuersystem Folgendes umfasst:
für jede Zelle (101, 101L, 101U), wenn die Zelle eine Temperatur innerhalb eines Schwellenwerts einer Verdampfungstemperatur der Zelle erreicht, Reduzieren des Drucks.

## Revendications

1. Appareil (100) pour le dessalement de l'eau de mer, l'appareil comprenant :
une série de cellules empilées (101, 101L, 101U), chaque cellule comprenant une surface inférieure (102) et une surface supérieure (103), et
une source de chaleur (104) pour fournir de la chaleur à la cellule la plus basse (101L),
dans lequel la surface supérieure (103) de chaque cellule des cellules empilées, à l'exception de la cellule la plus haute (101U), est en communication thermique avec la surface inférieure (102) de la cellule du dessus, dans lequel chaque cellule (101, 101L, 101U) comprend une sortie de collecte d'eau salée (105) en liaison fluidique avec la surface inférieure (102) et une sortie de collecte d'eau distillée (106) en communication fluidique avec la surface supérieure (103),
dans lequel l'appareil (100) comprend en outre un système de régulation de pression configuré pour réguler la pression dans chacune des cellules (101, 101L, 101U), le système de régulation de pression comprenant une série de modules de régulation de pression, chaque module de régulation de pression étant configuré pour réguler une pression d'une cellule respective,
dans lequel le système de régulation de pression comprend un système de régulation du vide, et dans lequel le système de régulation de pression est configuré pour ajuster la pression de chaque cellule (101, 101L, 101U) afin de maintenir un point d'évaporation dans chaque cellule.

2. Appareil selon la revendication 1, dans lequel le système de régulation de pression est configuré pour réguler la pression de chaque cellule (101, 101L, 101U) en fonction de la température de la cellule respective, dans lequel le système de régulation de pression est configuré pour faire baisser la pression d'une cellule lorsque la température de ladite cellule est plus basse.

3. Appareil selon une quelconque revendication précédente, dans lequel la source de chaleur (104) est configurée pour chauffer la cellule la plus basse (101L) à 100 °C.

4. Appareil selon une quelconque revendication précédente, dans lequel la source de chaleur (104) comprend un bain de chaleur en communication thermique avec la surface inférieure (102) de la cellule la plus basse (101L).

5. Appareil selon la revendication 4 comprenant en outre un système de récupération de chaleur (130) comprenant un échangeur de chaleur (132), le système de récupération de chaleur étant configuré pour :
recevoir le fluide du bain de chaleur,
recevoir de l'eau d'une ou plusieurs sorties de collecte d'eau distillée (106),
faire passer l'eau provenant d'une ou plusieurs sorties de collecte d'eau distillée (106) et le fluide provenant du bain de chaleur à travers l'échangeur de chaleur (132), et
renvoyer le fluide vers le bain de chaleur.

6. Appareil selon une quelconque revendication précédente,
dans lequel chacune des cellules (101, 101L, 101U) est en forme d'anneau,
les sorties d'eau distillée (106) sont chacune situées sur un côté intérieur des anneaux de leurs cellules respectives,
les sorties d'eau salée (105) sont chacune situées sur un côté intérieur des anneaux de leurs cellules respectives,
les sorties d'eau distillée (106) sont reliées à un ou plusieurs tuyaux de collecte d'eau distillée (112) passant au milieu des cellules empilées, et
les sorties d'eau salée (105) sont reliées à un ou plusieurs tuyaux de collecte d'eau salée (113) passant au milieu des cellules empilées.

7. Appareil selon la revendication 6, dans lequel chacun des un ou plusieurs tuyaux de collecte d'eau distillée (112) se termine par un tube plongeur respectif dans un contenant de collecte d'eau distillée.

8. Appareil selon la revendication 6 ou 7, dans lequel les un ou plusieurs tuyaux de collecte d'eau salée (113) sont reliés à un contenant de collecte d'eau salée.

9. Procédé de dessalement de l'eau de mer, à l'aide d'un appareil (100) selon l'une des revendications 1 à 8, la méthode comprenant :
la fourniture d'eau de mer à chaque cellule (101, 101L, 101U),
le chauffage de la cellule la plus basse (101L) avec la source de chaleur (104),
la régulation de la pression dans chaque cellule (101, 101L, 101U) à l'aide du système de régulation de pression, la collecte de l'eau salée à partir des sorties de collecte d'eau salée (105) et la collecte de l'eau distillée à partir des sorties de collecte d'eau distillée (106), dans lequel la régulation de la pression dans chaque cellule (101, 101L, 101U) comprend l'ajustement de la pression de chaque cellule afin de maintenir un point d'évaporation dans chaque cellule (101, 101L, 101U).

10. Procédé de dessalement de l'eau de mer selon la revendication 9, dans lequel le chauffage de la cellule la plus basse (101L) avec la source de chaleur (104) comprend le chauffage de la cellule la plus basse (101L) à 100 °C.

11. Procédé de dessalement de l'eau de mer selon l'une des revendications 9 ou 10, le procédé comprenant en outre la production de sel de mer à partir de l'eau salée recueillie.

12. Procédé de dessalement de l'eau de mer selon l'une des revendications 9 à 11, dans lequel la régulation de la pression dans chaque cellule (101, 101L, 101U) à l'aide du système de régulation de pression comprend :
pour chaque cellule (101, 101L, 101U), lorsque la cellule atteint une température comprise dans les limites d'une température de vaporisation de la cellule, la réduction de la pression de la cellule.
